# EUROPEAN PATENT APPLICATION

(11) **EP 2 479 609 A1**
(43) Date of publication of application: **25.07.2012**
(21) Application number: 11191429.7
(22) Date of filing: 30.11.2011
(51) Int. Cl.: G03B 9/10

(54) **Camera shutter**

(30) Priority: 21.01.2011 JP 2011010915
(71) Applicant: Mamiya Digital Imaging Co., Ltd., Tokyo 112-0004 (JP)
(72) Inventor: Kato, Shogo, Bunkyo-ku, Tokyo 112-0004 (JP)
(74) Representative: Gill, David Alan

(57) **Abstract**

A camera shutter operates to set iris closing blades (5) each to a preset position, start an exposure by moving opening shutter blades (4) to open a shutter opening (6), and terminate the exposure by moving the closing iris blades (5) to closing positions to close the shutter opening. A shutter drive (7,8b,8c,11) moves the opening shutter blades (4) to their open positions, a first hook (13) holds the shutter drive in a charged position prior to shutter opening, an iris drive (8,9,12) moves the closing iris blades (5) to closing positions, a second hook (14) holds the iris drive (8,9,12) in a charged position prior to iris closing; and a magnet (M) moves the first and second hooks between their rest positions and their charged positions according to controlled timings. The magnet (M) acts to start the exposure by opening the opening shutter blades, and after a period of time, closes the closing iris blades, thereby terminating the exposure. The shutter drive (7,8b,8c,11) and the iris drive (8,9,12) are each operated from their charged positions by a spring when they are released by their respective hooks.

## Description

The present application is based on Japanese patent application **No.**2011-010915 filed on January 21, 2011**,** the entire contents of which are incorporated herein by reference.

The present invention relates to a shutter opening and closing mechanism for a camera.

A known shutter opening and closing mechanism for a camera is disclosed, for example, in Japanese Patent Laid Open Publication H5-210144**.** According to technical information disclosed in said Japanese Patent Laid Open Publication, there is provided apparatus that controls driving and automatic focus controlling in a motor-driven shutter by a single motor and then controls shutter operation, the apparatus comprising a driving member d operated by a single motor m, an iris member n which makes a closing blade (iris blade) cp settle, or set, into a preset position via said driving member d by a normal (forward) rotation of said motor m, a closing member cm for moving said closing blade cp to a closed position, and a shutter blade s movable in an opening direction to an opened position, said apparatus being arranged so that said driving member d, by a reverse rotation of said motor m, releases said shutter blade s, and then releases hooking of said closing member cm by further reverse rotation of said motor m and thereby makes said closing blade close.

In other words, in the conventional technique of the prior Art mentioned above, the known mechanism controls driving and automatic focus controlling in a motor-driven shutter by a single motor and then operates the iris blade (closing blade) via said driving member by a normal (forward) rotation of said motor, thereby setting the iris blade to a preset value, and then, by a reverse rotation of said motor, further opens the shutter blade and releases hooking of said closing member by further reverse rotation of said motor, thereby making said iris blade close.

In other words, the known shutter opening and closing mechanism sets the closing blade to a preset position by means of normal (forward) rotation of the motor, opens the shutter blade by means of reverse rotation of the motor, and then moves the closing blade to the closed position by means of further reverse rotation of the motor.

However, since the mechanism controls setting the iris blade into a preset position and opening the shutter blade by respective forward and reverse rotations of said single motor and further controls the closing operation of the closing blade (iris blade), unstable operation is likely to occur based on clearances between each of the parts of the mechanism, and engagement states between each of the parts also cause problems, in particular friction.

Now, in another embodiment, a way can be considered to control initiating the opening operation of the shutter blade by a first magnet and controlling the closing operation of the closing blade by a second magnet. But it is likely that the structure of that other embodiment would be complex and unstable operation is still likely to occur and cause problems.

It is an object of the present invention to provide a shutter opening and closing mechanism for a camera having advantages over known such mechanisms and, in particular but not exclusively, a mechanism in which unstable operation and undesirable clearances as mentioned above would not occur and in which stable operation can be assured.

According to an aspect of the invention described in claim 1, a camera shutter is provided for setting a closing blade to a preset position, starting an exposure by moving an opening blade to open a shutter opening, and terminating the exposure by moving the closing blade to a closing position to close the shutter opening, the camera shutter comprising: a first drive member for moving said opening blade; a first holding means for holding said first drive member in a charged position; a second drive member for moving said closing blade to the closing position; a second holding means for holding said second drive member in a charged position; and a magnet for operating said first and second holding means according to controlled timing.

Preferably, the magnet can be controllable to move said second holding from a rest position to a charged position and release said first drive member by moving said first holding means, thereby causing start of the exposure by causing movement of said opening blade, and after a period of time, said magnet is operable to move said second holding means to cause said closing member to move to the closing position, thereby terminating the exposure.

Preferably the camera shutter can comprise a closing member operable by the second drive member to move the closing blade to the closed position.

Preferably the first and/or second holding means can include a hooking function.

Optionally, the camera shutter can comprise: a subsidiary holding means operable to move said second holding means in a reverse direction, said magnet being also for operating the subsidiary holding means according to controlled timing, and said subsidiary holding means is operable to move from a charged position to a rest position, thereby causing said second driving member to be coupled to said second holding means.

Preferably, the subsidiary holding means can include a hooking function.

Preferably, the camera shutter can comprise an armature lever operable to control pull or pull-off positions of the first and second holding means by said magnet.

Optionally, the camera shutter can comprise a restraining plate located between the first drive member and the opening blade.

Preferably, the camera shutter can comprise a restraining plate located between the second drive member and the closing blade.

Preferably, the first and/or second driving member can comprise a forked element. Preferably, the forked element comprises a slot substantially radial to the shutter opening.

Preferably, the camera shutter can comprise a spring coupled to the first and/or second drive member, the first or second drive member being movable by the spring when it is released by its respective first and/or second holding means.

According to a first embodiment, a camera shutter can be provided for settling a closing blade to a preset or predetermined position prior to starting of shutter operation, starting an exposure operation by an opening blade, and further terminating an exposure by displacing a closing blade to a closing position, a camera shutter comprising: a first driving member operating said opening blade; a first hook holding said first driving member in a charged position; a closing member operating said closing blade to a position closing a shutter opening; a second driving member displacing said closing blade to position closing a shutter opening by operating said closing member; a second hook holding said second driving member in a charged position; a magnet controlling operative timings between said first and second hooks; being constituting such that by said magnet controlled in connection with a releasing operation of the shutter, moves or displaces said second hook from rest position to charged position and releases said first driving member in connection with operating said first hook, and thereby starts the exposure operation by making said opening blade operate, and such that after a lapse of predetermined time, by said magnet releases the hooking between said second hook and said second driving member and then said closing member is operated by said second driving member so that an exposure operation terminates in connection with displacing said closing blade to the closing position thereof.

And according to a second embodiment, a camera shutter can be provided for settling a closing blade to a preset value in a predetermined position prior to starting of shutter operation, starting an exposure operation by an opening blade, and further terminating an exposure by displacing a closing blade to a closing position, a camera shutter comprising : a first driving member operating said opening blade; a first hook holding said first driving member in a charged position; a closing member operating said closing blade to a position closing a shutter opening; a second driving member displacing said closing blade to position closing a shutter opening by operating said closing member; a second hook holding said second driving member in a charged position; a subsidiary hook being operated almost simultaneously in order said second hook toward a reverse direction thereto; a magnet controlling operative timings between said first and second hooks and further said subsidiary hook; being constituting such that by said magnet controlled in connection with a releasing operation of the shutter, displaces said second hook from rest position to charged position, releases said first driving member in connection with operating said first hook, thereby starts the exposure operation by making said opening blade operate, and further displaced said subsidiary hook to a rest position from a charged position, and thereafter make said second driving member hold to said second hook, and such that after a lapse of predetermined time, by said magnet releases the hooking between said second hook and said second driving member, and then said closing member is operated by said second driving member so that an exposure operation terminates in connection with displacing said closing blade to the closing position thereof.

And according to third embodiment, a camera shutter can be provided for settling a closing blade to a preset value in a predetermined position prior to starting of shutter operation, starting an exposure operation by an opening blade, and further terminating an exposure by displacing a closing blade to a closing position, a camera shutter comprising: a first driving member operating said opening blade; a first hook holding said first driving member in a charged position; a closing member operating said closing blade to a position closing a shutter opening; a second driving member displacing said closing blade to position closing a shutter opening by operating said closing member; a second hook holding said second driving member in a charged position; a magnet controlling operative timings between said first and second hooks; an armature lever controlled pull or pull-off positions thereof by said magnet; being constituting such that by said magnet controlled in connection with a releasing operation of the shutter, operates said armature lever and then displaces said second hook from rest position to charged position, and releases said first driving member in connection with operating said first hook, and thereby starts the exposure operation by making said opening blade operate, and such that after a lapse of predetermined time, by said magnet operates said armature lever and releases the hooking between said second hook and said second driving member, and then said closing member is operated by said second driving member so that an exposure operation terminates in connection with displacing said closing blade to the closing position thereof.

And according to a fourth embodiment, a camera shutter can be provided for settling a closing blade to a preset value in a predetermined position prior to starting of shutter operation, starting an exposure operation by an opening blade, and further terminating an exposure by displacing a closing blade to a closing position, a camera shutter comprising: a first driving member operating said opening blade; a first hook holding said first driving member in a charged position; a closing member operating said closing blade to a position closing a shutter opening; a second driving member displacing said closing blade to position closing a shutter opening by operating said closing member; a second hook holding said second driving member in a charged position; a subsidiary hook being operated almost simultaneously in order said second hook toward a reverse direction thereto; a magnet controlling operative timings between said first and second hooks and further said subsidiary hook; an armature lever controlled pull or pull-off positions thereof by said magnet; being constituting such that by said magnet controlled in connection with a releasing operation of the shutter, operates said armature lever and then displaces said second hook from rest position to charged position, releases said first driving member in connection with operating said first hook, thereby starts the exposure operation by making said opening blade operate, and further displaced said subsidiary hook to a rest position from a charged position, and thereafter make said second driving member hold to said second hook, and such that after a lapse of predetermined time, by said magnet operates said armature lever, and releases the hooking between said second hook and said second driving member, and then said closing member is operated by said second driving member so that an exposure operation terminates in connection with displacing said closing blade to the closing position thereof.

And according to a fifth embodiment of the invention, a camera shutter can be provided for settling a closing blade to a preset value in a predetermined position prior to starting of shutter operation, starting an exposure operation by an opening blade, and further terminating an exposure by displacing a closing blade to a closing position, in addition to the constitution mentioned above, it constitutes such that opening blades are formed two pins thereon, one of said pins inserted in slits formed on a restrained member and another of said pins inserted in a hole formed on a driving ring, and then it can supply with a camera shutter constituted such that upon the shutter operation another of said pins displace by an operation of a driving ring and further one of said pins displace along a slit formed on a restrained member and thereby opening blades operate.

The present invention is described hereinafter, by way of example only, with reference to the drawings, in which:
**Fig.1** is a partial sectional view showing apparatus according to an embodiment of the present invention.
**Fig.2** is a plan view showing a part of the embodiment of **Fig. 1****.**
**Fig.3** is a partial enlarged view of part of the embodiment of **Fig. 2** in charged position.
**Fig.4** is another partial enlarged view of the embodiment of **Figs. 2** and **3** shown immediately after a release operation from the state shown in **Fig.3****.**
**Fig.5** is another partial enlarged view showing a fully opened state of opening blades according to an embodiment of the present invention.
**Fig.6** is another partial enlarged view shown immediately after starting of a closing operation of closing blades according to the embodiment of **Fig.5****.**
**Fig.7** is a plan view showing part of the embodiment of **Fig. 6** in a finished state of an exposure operation.
**Fig.8** is a plan view showing an iris shape formed by closing blades according to an embodiment of the present invention.
**Fig.9** is a plan view showing whole position in partial change according to another embodiment of the present invention.

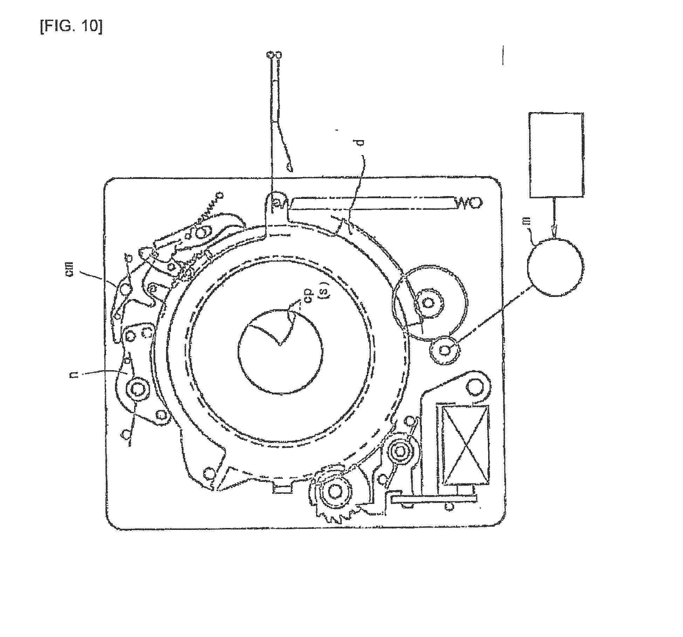

**Fig.10** is a schematic view showing an apparatus according to a conventional embodiment.

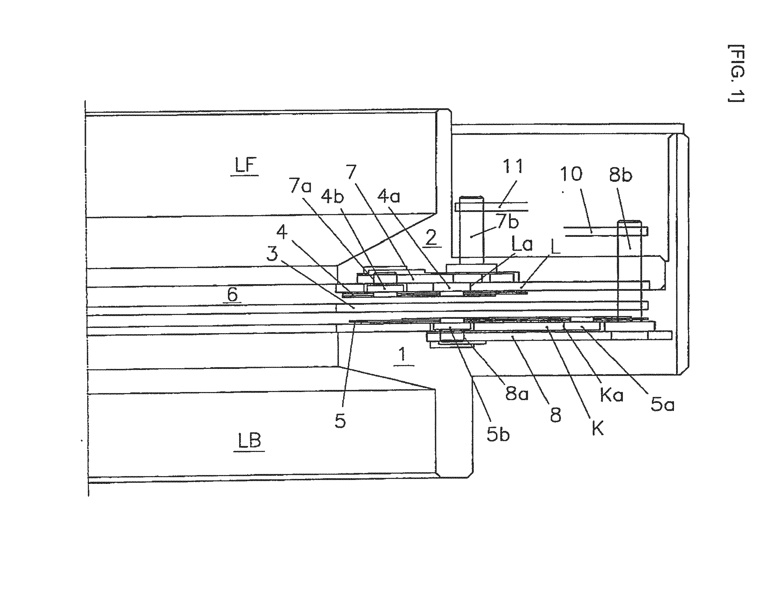

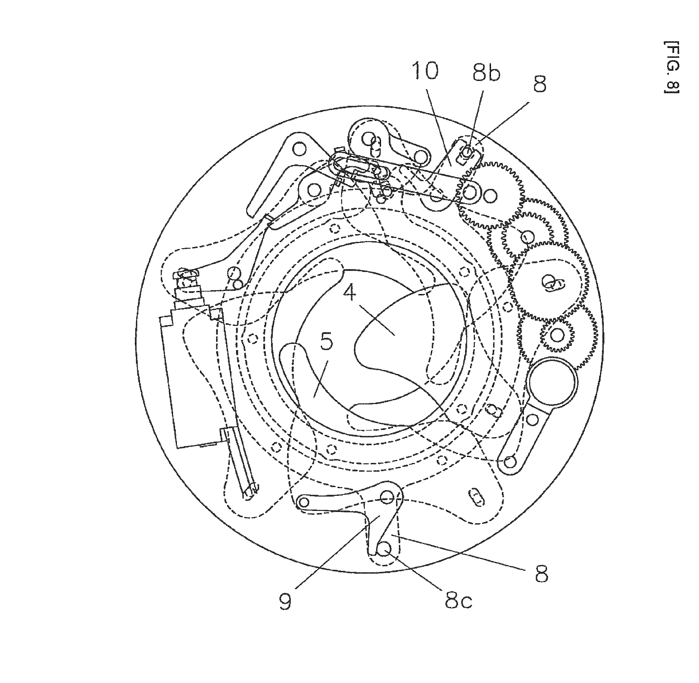

First of all, with reference to a structure or constitution of an embodiment of the opening and closing mechanism for a camera shutter, the present invention will be described in detail with reference to **Figs. 1 to 9****.** Now, the opening and closing mechanism for a camera shutter shown in each of drawings hereinafter shows the embodiment applied to a lens shutter.

**Fig.1** is a partial sectional view showing an opening and closing mechanism for a camera shutter according to the embodiment of the present invention. As shown in **Fig.1****,** the mechanism comprises a shutter case **1** attached to a rear lens group LB and a base plate **2** attached to a front lens group LF. And among them, there are a closing blade restraining plate **3** for forming an operating space of an opening blade and a closing blade, and respectively assembled an opening blade **4 in** an upper space and closing blade **5** in a lower space. The opening blade **4** and the closing blade **5** are respectively comprised of five pieces and these blades are arranged around a shutter opening **6** and control an opening and closing operation of the shutter opening **6**. The axis of the shutter opening and the lens groups is towards, and parallel to, the vertical line furthest to the left of the figure.

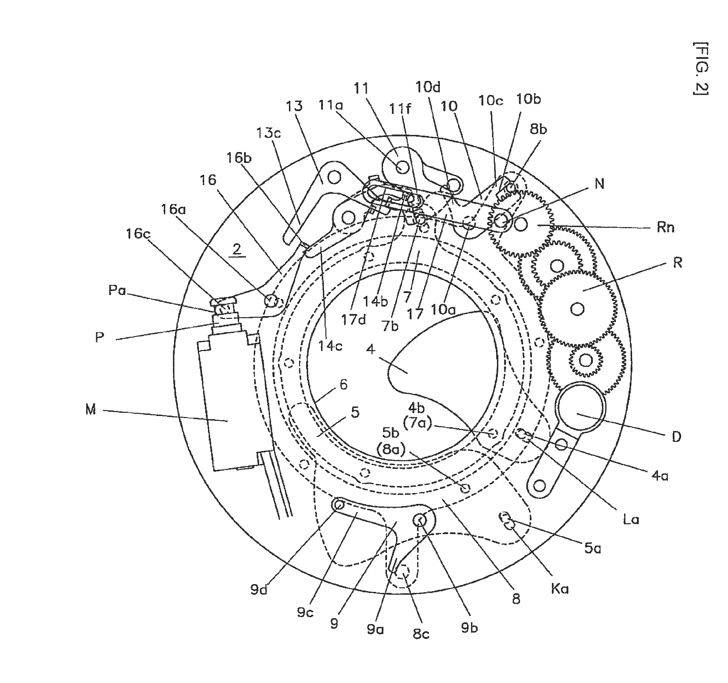

**Fig. 2** shows a plan view of a part of the embodiment in the opening and closing mechanism arranged on an upper side of the base plate **2**. On a center of the base plate **2**, there is formed the shutter opening **6** for passing light beams through lenses, and an opening and closing operation of this shutter opening **6** is carried out by the opening blade **4** and closing blade **5** respectively. Now, in **Fig. 2****,** in order to simplify and explain the figure, opening blade **4** and closing blade **5** are shown respectively as single pieces and the remainder of the blades are omitted in the figure.

Back to **Fig. 1** here, a ring restraining plate L is fixed on base plate **2** to attach a driving ring **7** to the base plate **2**, and also a closing ring restraining plate K is fixed on the shutter case to attach a closing ring **8** to the shutter case **3**. The driving ring **7** and the closing ring **8** are concentric around a common axis.

The ring restraining plate **L** is located between the driving ring **7** and the opening blade **4** and prevents interference between the driving ring **7** and the opening blade **4** when they operate.

The closing ring restraining plate **K** is located between the closing ring **8** and the closing blade **5** and prevents interference between the closing ring **8** and the closing blade **5** when they operate.

There are formed a pin **4a** and a driving pin **4b** on the opening blade **4**, pin **4a** being fitted in a slit La formed on ring restraining plate **L** and also the driving pin **4b** is fitted in a hole **7a** formed on the driving ring 7. Also there is a driving **pin 7b** attached on the driving ring **7,** the driving ring being freely rotatable around the shutter opening **6**. It should be understood that for each opening blade there is a respective pin **4a,** driving pin **4b ,** hole **7a,** driving pin **7b** and slit **La.**

On the other hand, the closing blade **5** provides a function to regulate an aperture opening size, and there are formed a pin **5a** and a driving pin **5b** on the closing blade **5**. For each closing blade there is a respective pin **5a** and driving pin **5b.** Pin **5a** is fitted in a slit **Ka** on closing ring restraining plate **K,** and driving pin **5b** is fitted in a hole **8a** formed on the closing ring **8**. For each closing blade there is a respective slit **Ka** and hole **8a.** Also on the closing ring **8**, providing a function as a closing member, are formed driving pins **8b, 8c** and they are freely rotatable, with the closing ring, around the shutter opening 6 by being forced in a clockwise direction by a spring (not shown). The driving pin **8c** contacts with an operating portion **9a** of an iris lever **9** and the driving pin 8b fits into a forked portion **10c** on a third driving member **10.**

Iris lever 9 is arranged such that it is attached freely rotatable around an axis 9b on base plate **2** and pins **9d** are attached on the iris lever **9**. A following portion **9c** sets a suitable aperture size by being operated using a well-known method. In other words, there are methods such that a position of the pin **9d** is set by making a well-known cam-member and so on displace, with a manual setting or by adopting a mechanism selecting automatically, a suitable aperture size according to a detected brightness of a surrounding. By setting the aperture size, the operating portion **9a** sets the closing ring **8** to a position corresponding to a predetermined aperture size by means of the driving pin **8c**.

The third driving member **10** is attached freely rotatable around an axis **10a** on the base plate **2** and comprises the forked portion **10c** in which is formed a slit **10b** into which can be inserted the operating pin 8b on closing ring **8**, and an operating portion **10d.** And now the third driving member **10** is controlled to be in an operating position by the slit **10b** being forced by pin **8b** in a clockwise direction thereby releasing or un-hooking pin **8b.** This causes the pin **9d** on the iris lever **9** to be displaced, the driving pin **8b** on the closing ring **8** being forced around the shutter opening **6** in a clockwise direction by a spring (not shown).

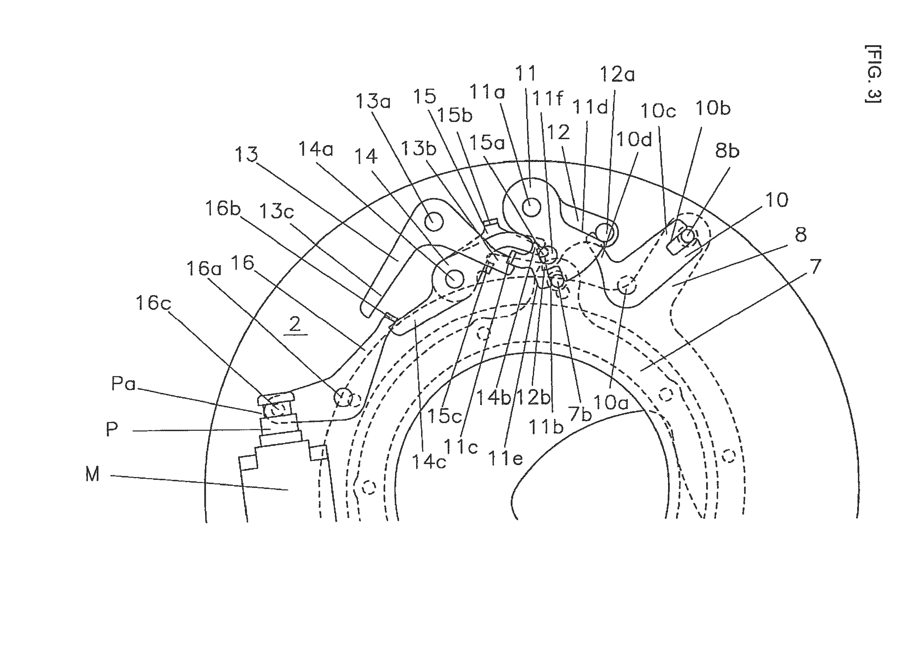

There will now be explained with reference to **Fig. 3** the structure of the driving mechanism for carrying out the opening and closing operation of the shutter. The first driving member **11** is attached freely rotatable around an axis **11a** on the base plate **2,** and has a slit **11b** by which the first driving member **11** is coupled to the pin **7b** on the driving ring **7.** The first driving member **11** has a bent portion **11c,** and is forced toward a clockwise direction by a spring not shown. And on the first driving member **11** there are formed a right side surface **11d** and a left side surface **11e** forming contact surfaces, and also a charging pin **11f** projecting in an upward direction.

Further, the second driving member **12** is attached freely rotatable around the same axis **11a** as the first driving member **11,** and is forced in clockwise direction by a spring (not shown), keeping in a charged position thereof so that a pin **12a** contacts with a right side surface **11d** of the first driving member **11,** and there is formed a bent portion **12b** on the second driving member **12.**

A first hook **13** is attached freely rotatable around an axis **13a** on the base plate **2,** is formed of a hook portion **13b** and an operating portion **13c,** and is forced toward a counter clockwise direction by a spring (not shown). And in a charged position the first hook **13** obstructs or inhibits rotation of the first driving member **11** toward clockwise direction according to contact between the hook portion **13b** of the first hook **13** and the bent portion 11c of the first driving portion **11.**

A second hook **14** is attached freely rotatable around an axis **14a** on the base plate **2.** The second hook **14** is formed of a hook portion **14b** and an operating portion **14c,** and is forced toward a clockwise direction by a spring (not shown).

A subsidiary hook **15** is attached freely rotatable around axis **14a** on the base plate **2,** and is forced toward a clockwise direction by a spring (not shown). The subsidiary hook **15** comprises a hook portion **15a** which contacts with the bent portion **12b** of the second driving member **12** and thereby keeps the second drive member **12** in the charged position shown in **Fig.2** and **Fig.3****.** And further, on the subsidiary hook **15** there are formed a bent portion **15b** and another bent portion **15c** contacting with the left surface **11e** of the first driving member 11. Besides, in a charged position before starting of an operation, the second hook **14** is in a rest position so that hook portion **14b** does not contact with the bent portion **12b** of the second driving member **12,** and constituted such that it is displaced toward a hook position in accordance with the starting of the operation by the armature lever **16.** In other words, the hook portion **12b** of the second driving member **12** is held by the hook portion **15a** of the subsidiary hook **15** and therefore it is arranged that the hook portion **14b** of the second hook 14 secures a short clearance among the bent portion **12b.**

Armature lever **16** is attached freely rotatable around an axis **16a** on the base plate **2,** and there are formed the operating portion **14c** of the second hook **14,** a bent portion **16b** contacted with the operating portion **13c** of the first hook **13** and further a pin **16c** coupled to a slit Pa formed on a plunger P included in a magnet M.

Hereupon, the magnet M is connected to an electronic control circuit which is well known but not shown, and makes the plunger P pull in a direction toward a side of the magnet M depending on applying a current to control an exposure time in the shutter, and further operates such as to pull off in an opposite direction. In this way, the operation of the plunger P operates pin **16c** coupled to slit Pa and thereby the armature lever **16** toward a counter clockwise or a clockwise direction in order.

Next, an apparatus for charging the shutter mechanism is described (see **Fig,2** and **Fig.3****).** A driving motor D attached on the base plate **2** is operated through an electric circuit (not shown) for a shutter charge and then rotations of a driving motor D are decelerated through a gear train R in turn. And a setting member **17** supported with a pin N formed on a gear Rn of a final stage in the gear train R is operated toward reciprocate directions through a rotation of the gear Rn.

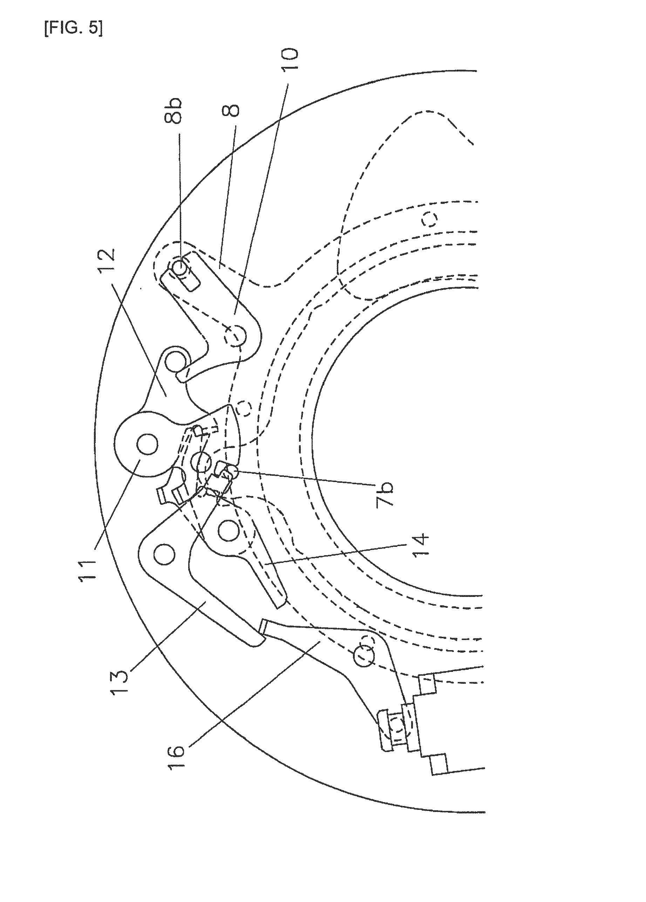

As a result, it makes the charging pin **11f** on the first driving member **11,** located in a slit **17d** formed on a left end of the setting member **17,** turn in a counter clockwise direction around axis **11a** from a final operating position shown in **Fig.5****,** and move or displace the first driving member **11** to the charged position shown in **Fig.2****.** Now, the rotation of the gear Rn of the final stage in the gear train R is decelerated through the gear train R in turn such that the gear Rn rotates approximately one round corresponding with every charging operation on the driving motor D.

According to the above features, as required in a film camera arranged with a silver chloride film on a focusing surface, it is possible for the closing blade **5** to open the shutter opening **6** after the opening blade **4** closes it. But a digital camera, arranged with a CCD or CMOS sensor on a focusing surface, would not need the closing blade **5** to open the shutter opening **6** after the opening blade **4** closes it. In brief, it is acceptable that an operation collecting imaging signals from sensors is carried out upon an exposure finishing signal described hereinafter.

Further, as the slit **17a** formed on the left side of the setting member **17** is prolonged till an end portion thereof, it would be necessary for there to be no obstruction on an operation of the first driving member **11,** even if the charging pin **11f** would move in a predetermined area for an operation thereof during a shutter operation.

Next, as hereafter, it will be explained how to operate the opening and closing mechanism of the shutter for a camera constituted as mentioned hereinabove. In the position shown in **Fig.2****,** in order to start a shutter operation, an electric current is applied to a magnet M connected to a well-known electronic control circuit and thereby it operates such as to pull plunger P toward a side of the magnet M depending on a magnetic field in the magnet M. Depending upon the operation thereof, the pin **16c** fitting to slit Pa of the plunger P is operated, the armature lever **16** is turned around the axis **16a** toward a counter clockwise direction, the operating portion **14c** of the second hook **14** is operated following the bent portion **16b** toward a clockwise direction, and therewith the hook portion **14b** displaces to a position to hook the bent portion **12b** of the second driving member **12**.

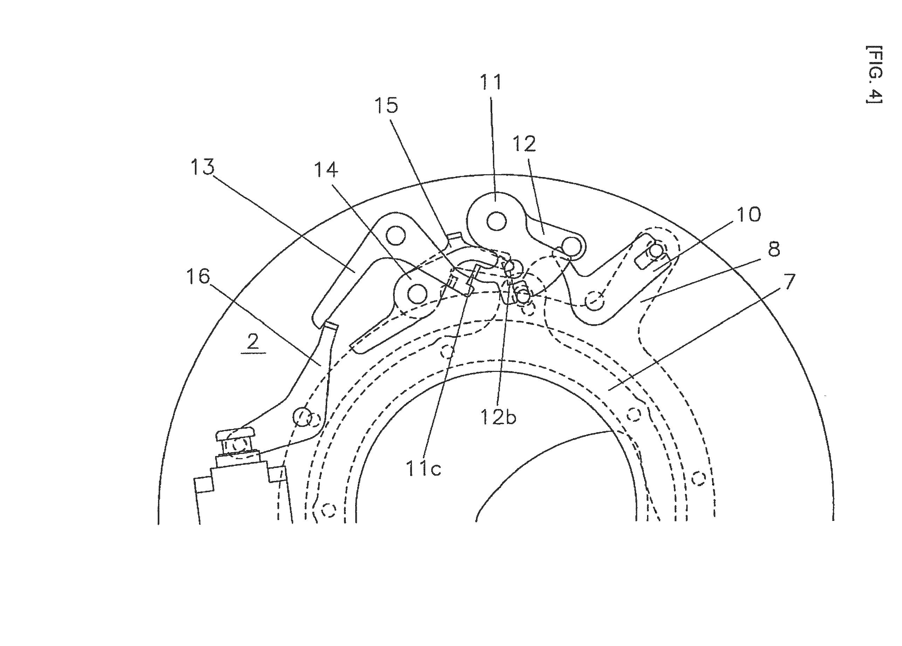

By a continuous rotation of the armature lever **16** toward a counter clockwise direction, the bent portion **16b** acts upon the operating portion **13c** of the first hook 13 and makes the first hook **13** rotate around an axis **13a** toward a clockwise direction, and thereby releases the hook with the bent portion **11c** on the first driving member **11** from the hook portion **13b** (See **Fig.4****).** Depending upon this operation, the first driving member **11** rotates toward a clockwise direction and operates the pin **7b** fitting to the slit **11b** and thereby rotates the driving ring **7** around an optical axis toward a counter clockwise direction and makes the opening blade **4** operate to open the shutter opening **6.**

The first driving member **11** turns toward a clockwise direction, on a final stage of an operation thereof, pushes the bent portion **15c** of the subsidiary hook **15** by the left side surface **11e,** and releases the hook with the bent portion **12b** on the second driving member **12** from the hook portion **15a** (See **Fig.5****).** Further, the first driving member **11** operates a flash synchronizing switch (well-known but not shown) on a final stage of a clockwise rotation thereof and makes it operable to carry out a flash exposure. This switch operation for a flash synchronization would be used to fire a flash just after the opening blade 4 would be fully opened.

On the other hand, as the bent portion **12b** of the second driving member **12** is hooked already on the hook portion **14b** of the second hook **14,** the second driving member **12** would keep in a position approximately as shown in the figure without a rotation toward a clockwise direction.

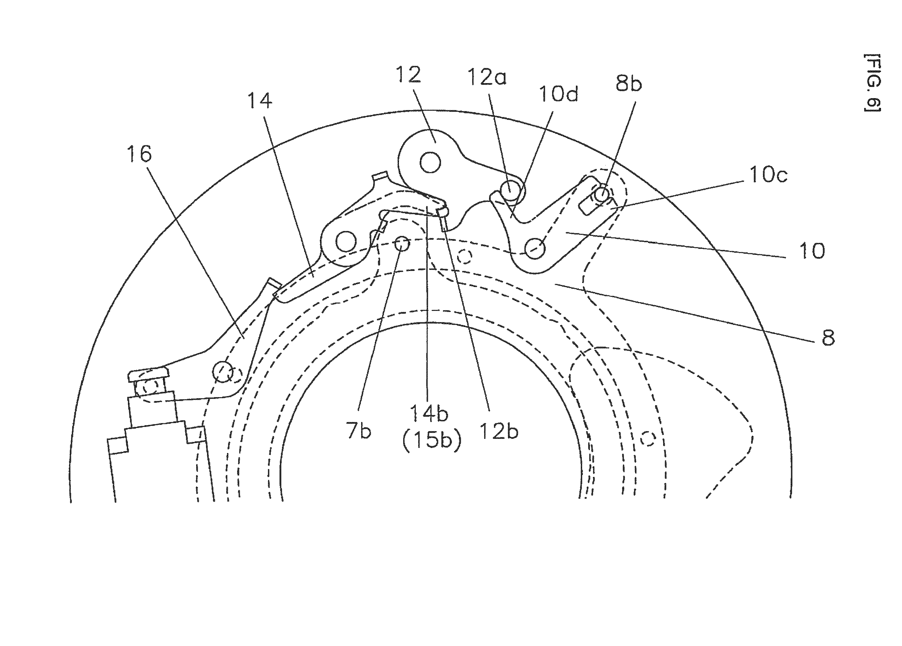

In order to control of the exposure time of the shutter, after a predetermined time elapses, an electric current is applied to magnet M to a reverse direction, and then the plunger P moves or displaces immediately to the place where it was, and thereby operates the pin **16c** of the armature lever **16** by the slit Pa thereof. The armature lever 16 rotates around the axis **16a** in a clockwise direction and the bent portion **16b** contacts with the operating portion **14c,** and then makes the second hook **14** rotate around the axis **14a** toward a counter clockwise direction. During this operation, the second hook **14** releases the hook with the bent portion **12b** of the second driving member **12** from the hook portion **14b** (See **Fig.6****),** and then the second driving member **12** starts to rotate toward a clockwise direction, the pin **12a** contacts with the operating portion **10d** and thereby makes the third driving member **10** rotate around the axis 10a toward a counter clockwise direction.

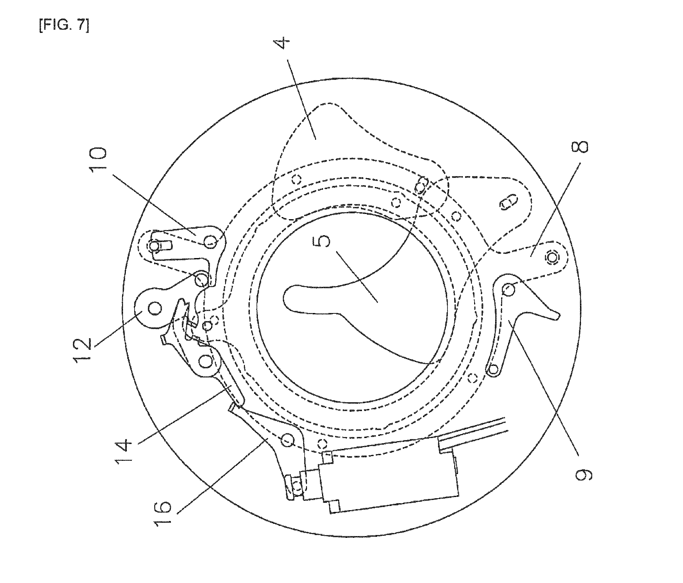

The third driving member **10** rotates toward a counter clockwise direction, fits the pin **8b** in the slit **10b** formed on the forked portion **10c** and thereby the closing ring **8** rotate around an optical axis toward a counter clockwise direction and thereafter ends the exposure operation by closing the closing blade **5** forming a predetermined aperture size. **Fig.7** shows this situation.

In addition, it is possible to carry out a flash light exposure by operating a second flash synchronizing switch, not shown but well-known, at the same time approximately as a third driving member **10** starts to operate. This operation with a flash synchronize switch would be used in a case to fire a flash just before closing blade **5** starts a closing operation.

Hereupon, depending upon selection cases that said first driving member **11** makes a flash synchronizing switch operate at a final stage of a clockwise rotation or that it operates a second flash synchronizing switch at the same time approximately as the third driving member **10** starts to operate, it can obtain different effects with flash firing respectively.

By the operation described above, one cycle of shutter operation would be completed. The driving motor D starts the operation based on this complete signal, thereafter the gear Rn rotates through the gear train R. And then by the setting plate **17,** the charge pin **11f** is displaced from the position shown in **Fig.5** to right direction and the first driving member **11**, the second driving member **12** and the third driving member **10** are displaced respectively to charged positions shown in **Fig.2****.**

Further, at the same time as said shutter operation is completed, imaging signals stored in the sensor are transmitted to an image processing circuit based on this complete signal of the operation and preserved as static images.

For ease of understanding of the apparatus described above, pins **4a, 4b** are formed on each opening blade, pin **4a** is fitted in the enlarged slit La on the ring restraining plate L, and the driving pin **4b** is fitted in the hole **7a** formed on the driving ring **7**.

Also pins **5a, 5b** are formed on each closing blade **5,** pin **5a** is fitted in enlarged slit Ka on the closing ring restraining plate K and the driving pin **5b** is fitted in the hole **8a** formed on the closing ring **8**.

This apparatus is different from that of a conventional shutter, it is a new apparatus based on the present invention, and it is an extremely useful apparatus in increasing endurance of a shutter.

In a conventional shutter blade operated with high speed, there are formed a round hole and an enlarged slit on the shutter blade formed by a thin plate, and the shutter blade is made operable by fitting a driving pin into said round hole and fitting a stationary pin into said enlarged slit. And therefore, abrasion occurs on the shutter blade as a result of friction between said round hole and said driving pin, or between said enlarged slit and said stationary pin, and a deterioration of the shutter performance during prolonged operation would occur. Namely, since the round hole and enlarged slit are formed on a shutter blade formed of thin material and the round hole and enlarged slit contact with respective pins formed on sectional surfaces of a very thin plate, it that frictional heat would be generated at the contact points between the hole and slit and the respective pins.

Whereas by contrast, in the embodiment described above, pins **4a, 4b** are formed on the shutter blade (opening blade) **4** constituted of thin material plates, pin **4a** fits to the enlarged slit La on the ring restraining plate L made of extremely thick material compared with that of the shutter blade and driving pin **4b** fits to round hole 7a formed on a driving ring **7** which is made of thick material compared with that of the shutter blade. Namely, two pins are formed on the opening blade **4** which is operated with high speed, surfaces sliding against the opening blade **4** are formed of relatively thick materials and therefore frictional energy would be distributed in this contact region occupying extremely wide area compared to a conventional apparatus, and therefore abrasion would be very much reduced and also the endurance of the shutter can be advanced greatly. And the same principles apply in connection with the driving ring **7** and the closing blade **5** so that efficiency of the driving ring **7** and the closing blade **5** can also be greatly increased.

According to the description above, the ring restraining plate L prevents interference between the driving ring **7** and the opening blade **4** during shutter operation, and the closing ring restraining plate K prevents interference between the closing ring **8** and the closing blade **5** during operation. If this function providing an ability to prevent interference could be provided so that the ring restraining plate L and the closing ring restraining plate K are provided or constituted so that they attach directly on the base plate **2** or the shutter case **1** by a screw or a bayonet and so on, it would be possible to omit the ring restraining plate L and the closing ring restraining plate K. And, in this case, enlarged slits La, Ka are provided or constituted on the base plate **2** or the shutter case **1** and so on.

And her there is shown an embodiment formed of a round hole on the driving ring and an elongate slit on the fixed part side. But without a restriction of said embodiment, the present invention can be embodied such that the embodiment includes an elongate slit on the driving ring side and a round hole on the fixed part side.

The effect of the invention is as follows. According to the first embodiment, it can be constituted such that said magnet, controlled in connection with a releasing operation of the shutter, displaces said second hook from rest position to charged position and releases said first driving member in connection with operating said first hook, and thereby starts the exposure operation by making said opening blade operate, and such that after a lapse of predetermined time, said magnet releases the hooking between said second hook and said second driving member and then said closing member is operated by said second driving member so that the exposure operation terminates in connection with displacing said closing blade to the closing position.

And according to the second embodiment, on account of providing a subsidiary hook being operated almost simultaneously in order said second hook toward a reverse direction thereto, weights loaded to said second hook from said first driving member and said second driving member are shared between said second hook and said subsidiary hook, operations thereof would be preferably smooth as a weight on operating said first hook would be reduced.

And further according to the third embodiment, the armature lever operated by the plunger of the magnet lies between the magnet and the second hook or the first hook, and therefore flexibility in design freedom increases comparative with a case operating directly without having an armature lever, and design freedom is increased.

And further according to the fourth embodiment, operations would be preferably smooth and flexibility in design freedom is increased.

The above-described embodiment is a realization of the technical idea of the present invention but the present invention should be not limited or restricted to that embodiment. The invention could be realized using various alternative embodiments within the scope of the present invention.

For example, by deletion of the armature lever **16** in the above embodiment, the plunger P may directly operate the operating portion **14c** of the second hook **14** and the operating portion **13c** of the first hook **13**. In this case, it would be easily understood that the operating direction of the plunger P would be a reverse direction compared with the case mentioned above.

And now, the third driving member **10** is only a reversing member of an operating direction and not an indispensable component of the present invention. In other words, it arranges the driving pin **8b** formed on the closing ring **8** to a neighbor of the second driving member **12,** and constitutes such that it is operated directly by the second driving member **12** and thereby can gain the same effect by said operation.

And further, it can constitute such that after it pulls the plunger into the magnet on turning on electronic current to the magnet, it puts back again on cutting off electronic current thereto, or that it provides a magnet winding two coils on normal and reverse directions and it the plunger P operate back and forth on turning on electronic current to the magnet with said two coils in order. And it can be constituted as providing a permanent magnet in part of plunger P or magnet M and it may adopt a way to control such that they pull or pull off each other by turning on electronic current to a magnet.

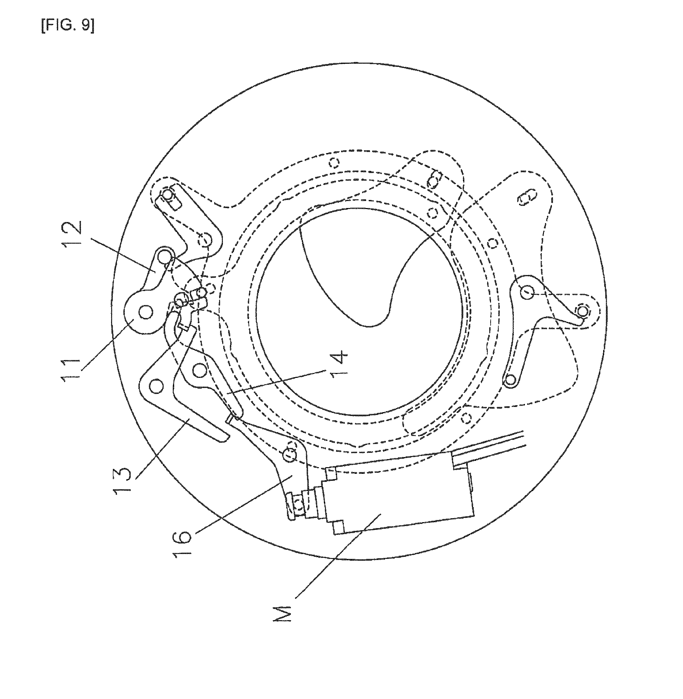

And as shown in **Fig.9****,** by deleting the subsidiary hook **15** in the embodiment described above, the second hook **14** may act to hook and release the second driving member **12**. Namely, in a case where the subsidiary hook **15** is deleted, the pin **12d** of the second driving member **12** is kept in place as shown in **Fig.3** by the right side surface **11d** of the first driving member **11,** and the hook portion **14b** of the second hook **14** is displaceable to hook the bent portion **12b** of the second driving member **12** in accordance with the operation of the armature lever **16**. Subsequent operations would be as described above.

## Claims

1. A camera shutter for setting a closing blade (5) to a preset position, starting an exposure by moving an opening blade (4) to open a shutter opening (6), and terminating the exposure by moving the closing blade (5) to a closing position to close the shutter opening, the camera shutter comprising:
a first drive member (7, 8b, 8c, 11) for moving said opening blade (4);
a first holding means (13) for holding said first drive member (7, 8b, 8c, 11) in a charged position;
a second drive member (8, 9, 12) for moving said closing blade (5) to the closing position;
a second holding means (14) for holding said second drive member (8, 9, 12) in a charged position; and
a magnet (M) for operating said first and second holding means according to controlled timing.

2. The camera shutter of claim 1, wherein said magnet is controllable to move said second holding means from a rest position to a charged position and release said first drive member by moving said first holding means, thereby causing start of the exposure by causing movement of said opening blade,
and wherein after a period of time, said magnet is operable to move said second holding means to cause said closing member to move to the closing position, thereby terminating the exposure.

3. The camera shutter of claim 3, comprising a closing member (8b, 8c) operable by the second drive member to move the closing blade to the closed position.

4. The camera shutter of any one of claims 1 to 4, wherein the first and/or second holding means has a hooking function.

5. The camera shutter of any one of claims 1 to 4, comprising:
a subsidiary holding means (15) operable to move said second holding means in a reverse direction,
wherein said magnet is also for operating the subsidiary holding means according to controlled timing, and
wherein said subsidiary holding means is operable to move from a charged position to a rest position, thereby causing said second driving member to be coupled to said second holding means.

6. The camera shutter of claim 5, wherein the subsidiary holding means has a hooking function.

7. The camera shutter of any one of claims 1 to 6, further comprising:
an armature lever (16) operable to control pull or pull-off positions of the first and second holding means by said magnet.

8. The camera shutter of any preceding claim, further comprising a restraining plate (L) located between the first drive member and the opening blade.

9. The camera shutter of any preceding claim, further comprising a restraining plate (K) located between the second drive member and the closing blade.

10. The camera shutter of any preceding claim, wherein the first driving member comprises a forked element.

11. The camera shutter of claim 10, wherein the forked element of the first driving member comprises a slot substantially radial to the shutter opening.

12. The camera shutter of any preceding claim, wherein the second drive member comprises a forked element.

13. The camera shutter of claim 10, wherein the forked element of the second drive member comprises a slot substantially radial to the shutter opening.

14. The camera shutter of any preceding claim, further comprising a spring coupled to the first drive member, wherein the first drive member is movable by the spring when it is released by the first holding means.

15. The camera shutter of any one of claims 1 to 13, further comprising a spring coupled to the second drive member, wherein the second drive member is movable by the spring when it is released by the second holding means.
